# EUROPEAN PATENT APPLICATION

(11) **EP 4 268 607 A1**
(43) Date of publication of application: **01.11.2023**
(21) Application number: 21898718.8
(22) Date of filing: 29.11.2021
(51) Int. Cl.: A23L 7/10, A23L 23/10, A23L 19/00, A23L 13/00, A23L 17/00, A23L 29/20

(54) **FROZEN PORRIDGE KIT AND METHOD FOR MANUFACTURING PORRIDGE USING SAME**

(30) Priority: 30.11.2020 KR 20200164991
(71) Applicant: CJ Cheiljedang Corporation, Seoul 04560 (KR)
(72) Inventor: KIM, Hee Jeung, Seoul 04560 (KR); LIM, Hyung Soo, Seoul 04560 (KR); PARK, Hong Wook, Seoul 04560 (KR); KANG, Ki Moon, Seoul 04560 (KR)
(74) Representative: Cabinet Laurent & Charras
(86) International application number: PCT/KR2021/017757
(87) International publication number: WO 2022/114893

(57) **Abstract**

The present invention relates to a frozen porridge kit including a rice porridge block and a sauce block and a method of preparing a porridge using the same. According to the present invention, there is provided a frozen porridge kit having advantages capable of easily preparing a high-quality porridge by performing a simple process of thawing the kit, and capable of preparing a porridge suitable for a preference without difficulty by users who are not familiar with cooking by adjusting the type and ratio of blocks in the kit by consumers.

## Description

### [Technical Field]

The present invention relates to a frozen porridge kit and a method of preparing a porridge by using the same.

### [Background Art]

Conventional instant porridge products have a disadvantage that the unique textures of raw materials are damaged as the solids contained in the porridge are dried and powdered, resulting in poor taste quality, including texture, and the porridge products manufactured through retort sterilization have a problem in that the taste quality is also reduced due to a peculiarly weird taste and smell caused by a heat treatment process. In addition, since the conventional instant porridges have their set type, taste, and amount of the porridge to be provided, a consumer who purchased the instant porridges had no choice but to make and eat only a porridge in a form intended by a preparer.

Regarding frozen porridges or instant porridges, Korean Laid-open Patent Publication No. 2018-0099971 discloses a frozen packaging porridge in the form of mixing half-cooked rice with vegetable garnish, sauce, etc., sealing and rapidly freezing the mixture while disclosing a method for preparing the frozen packaging porridge. In addition, Korean Laid-open Patent Publication No. 2019-0065550 discloses a frozen porridge in the form of ice cream in which ingredients such as milk are added based on a dry porridge obtained by drying and pulverizing rice with hot air.

However, in preparing the frozen porridge, a rice porridge, which is a base of the frozen porridge, is frozen and blocked, and raw materials such as vegetables, meat, seafood, etc. and sauces are blocked, and then a mixture thereof is kitted. Accordingly, there has been no research or commercialization of a frozen porridge kit made so that consumers can easily change the taste, type, and amount of the porridge according to their tastes while maintaining the texture of the raw materials of the porridge, to prepare and eat the porridge. Accordingly, the present inventor of the present invention has constituted a new type of frozen porridge kit by including a frozen rice porridge block and a sauce block together, and completed a frozen porridge kit of the present invention capable of preparing a high-quality porridge with excellent preparation efficiency by adjusting ingredients in each block.

### [Disclosure]

### [Technical Problem]

An object of the present invention is to provide a frozen porridge kit capable of being prepared with constant quality even during mass production.

Another object of the present invention is to provide a frozen porridge kit so that users who are not familiar with cooking can easily prepare a porridge with constant quality and prepare a porridge of various flavors by using the kit.

Yet another object of the present invention is to provide a method for easily preparing a high-quality porridge by using the kit.

Still another object of the present invention is to provide a porridge prepared through the method.

### [Technical Solution]

In order to achieve the object, an aspect of the present invention provides a frozen porridge kit including at least one frozen rice porridge block containing rice as a first block; and at least one frozen sauce block containing a sauce as a second block.

Another aspect of the present invention provides a method for preparing a porridge including thawing the frozen porridge kit of claim 1.

Yet another aspect of the present invention provides a porridge prepared by the method for preparing the porridge.

Hereinafter, the present invention will be described in detail.

One aspect of the present invention provides a frozen porridge kit.

The frozen porridge kit includes at least one frozen rice porridge block containing rice as a first block; and at least one frozen sauce block containing sauce as a second block.

Since the frozen porridge kit of the present invention includes a pre-cooked porridge composition in a frozen block state, there is an advantage in that anyone can easily make and eat a high-quality porridge because it is possible to implement a porridge with quality similar to that prepared/sold in a porridge specialty store with only a simple process of thawing the frozen porridge kit. In addition, since the frozen porridge kit includes one or more uniform frozen blocks in a predetermined amount, users who are not familiar with cooking can prepare a porridge with desired taste and quality by easily adjusting the amount and ratio of blocks, so that there is an effect that a process of individually measuring the amount of raw materials of the porridge and blending and adding the exact amount may be omitted. In addition, it is possible to easily change a type of porridge to be finally prepared by changing the number, ratio, and type of blocks included in the frozen porridge kit. That is, the frozen porridge kit of the present invention has a possibility of providing various types of porridges by changing a type of sauce block based on the rice porridge block that is the basis for preparing the porridge.

The frozen rice porridge block may be frozen in a block form after the composition for preparing the porridge containing rice is pre-cooked or cooked. Specifically, the frozen rice porridge block may be prepared in the form of block by mixing rice porridge raw materials including rice with water, stirring the mixture while heating, and then cooling the mixture.

The rice may be used with any rice commonly used in the preparation of the porridge regardless of its type, and may be, for example, japonica or indica rice, but is not limited thereto. In addition, the rice may be nonglutinous rice, glutinous rice, or a combination thereof. The starch ingredient of the nonglutinous rice may be amylose and amylopectin, and the starch ingredient of the glutinous rice may be amylopectin. Compared to the nonglutinous rice, the glutinous rice may be stickier when cooking the rice.

The rice porridge block may contain rice in an amount of 22 wt% to 26 wt%. Specifically, the rice may be contained in the rice porridge block in the content range consisting of a lower limit selected from 22 wt%, 22.5 wt%, 23 wt%, 23.5 wt% and 24 wt% and/or an upper limit selected from 26 wt%, 25.5 wt%, 25 wt%, 24 wt% and 24.5 wt%. For example, the rice may be contained in the content of 22 wt% to 26 wt%, 22.5 wt% to 25.5 wt%, 23 wt% to 25 wt%, 22.5 wt% to 25 wt%, 23 wt% to 25.5 wt%, 23 wt% to 24.5 wt%, 23.5 wt% to 25 wt%, 24 wt% to 25 wt%, 24 wt% to 24.5 wt% or 24.5 wt% to 25 wt%. When the content of rice contained in the rice porridge block is equal to the above range, rice grains do not sink too much in the rice porridge in the unfrozen state, and thus dispersibility is good and the viscosity is not too high while having a viscosity suitable for eating, so that there is no difficulty in a process of filling the rice porridge in a mold before freezing, thereby increasing the preparation efficiency.

The rice porridge block may contain glutinous rice in the content of 0 wt% to 10 wt%; and nonglutinous rice in the content of 10 wt% to 20 wt%. Specifically, the glutinous rice may be contained in the rice porridge block in the content range consisting of a lower limit selected from 0 wt%, 0.5 wt%, 1 wt%, 2 wt%, 3 wt%, 4 wt%, 5 wt%, and 6 wt%, and/or an upper limit selected from 10 wt%, 9.5 wt%, 9 wt%, 8.5 wt%, 8 wt%, 7 wt%, 6.5 wt% and 6 wt%. For example, the glutinous rice may be contained in the content of 0 wt% to 10 wt%, 0.5 wt% to 9.5 wt%, 1 wt% to 9 wt%, 2 wt% to 8.5 wt%, 3 wt% to 8 wt%, 4 wt% to 7 wt%, 5 wt% to 6.5 wt%, 6 wt% to 6.5 wt%, or 5 wt% to 6 wt%. In addition, the nonglutinous rice may be contained in the rice porridge block in the content range consisting of a lower limit selected from 10 wt%, 11 wt%, 12 wt%, 13 wt%, 14 wt%, 15 wt%, and 16 wt% and/or an upper limit selected from 20 wt%, 19 wt%, 18 wt%, 17 wt%, and 16 wt%. For example, the nonglutinous rice may be contained in the content of 10 wt% to 20 wt%, 11 wt% to 20 wt%, 12 wt% to 20 wt%, 13 wt% to 19 wt%, 14 wt% to 19 wt%, 15 wt% to 19 wt%, 16 wt% to 19 wt%, 17 wt% to 18 wt%, 15 wt% to 17 wt% or 16 wt% to 17 wt%.

The rice porridge block may further contain at least one selected from the group consisting of refined salt, sesame oil and modified starch.

The rice porridge block may have a viscosity of 0.5 cm to 22 cm, or 3.5 cm to 22 cm, as measured in an unfrozen state. Specifically, the viscosity for 100 g of the rice porridge in the unfrozen state may be measured with a Bostwick consistometer, and the viscosity value may be measured by a distance moved for 15 seconds by adding 100 g of the rice porridge in the unfrozen state to the Bostwick consistometer. Since the viscosity is measured by the distance moved on the inclined surface of the consistometer for the same time, the higher the viscosity, the smaller the viscosity value is measured. The viscosity may be in a range consisting of a lower limit selected from 0.5 cm, 1 cm, 1.5 cm, 2 cm, 2.5 cm, 3 cm, 3.5 cm, 3.8 cm, 3.9 cm, 4.0 cm, 4.5 cm, 5.0 cm, 5.5 cm, 6.0 cm, 6.5 cm, 7.0 cm, 7.5 cm and 8.0 cm and/or an upper limit selected from 22 cm, 21.5 cm, 21 cm, 20 cm, 18 cm, 16 cm, 15 cm, 14 cm, 13 cm, 12 cm, 11 cm and 10 cm. For example, the viscosity may be 3.5 cm to 22 cm, 3.8 cm to 21.5 cm, 4.0 cm to 20 cm, 4.0 cm to 18 cm, 4.5 cm to 16 cm, 5.0 cm to 15 cm, 5.0 cm to 13 cm, 5.0 cm to 11 cm or 5.0 cm to 10 cm. When the viscosity of the rice porridge block in the unfrozen state is in the above range, rice grains do not sink too much in the rice porridge, and thus dispersibility is good and the viscosity is not too high while having a viscosity suitable for eating, so that there is no difficulty in a process of filling the rice porridge in a mold before freezing the rice porridge, thereby increasing the preparation efficiency. The "unfrozen state" herein may be a state before freezing the rice porridge block, or a state in which the frozen rice porridge block is thawed before cooking.

The rice porridge block may have a moisture content of 15% to 25% as measured in the unfrozen state. The moisture content may be calculated as a percentage by dividing a difference value between the mass of the rice porridge block before drying at a high temperature and the mass after drying by the mass before drying, and for example, the drying may be left at 105°C for 20 hours. Specifically, the moisture content may be in a range consisting of a lower limit selected from 15%, 16%, 17%, 18%, 19%, 19.5%, 20%, 20.5% and 21% and/or an upper limit selected from 25%, 24.5%, 24%, 23.5%, 23%, 22.5%, 22%, 21.5% and 21%. In one example, the moisture content may be 15% to 25%, 16% to 24.5%, 17% to 24%, 18% to 23.5%, 19% to 23%, 19.5% to 22.5%, 20% to 220, 20.5% to 21.5%, 20.5% to 21% or 21% to 21.5%. The frozen rice porridge block included in the frozen porridge kit of the present invention has the same effect as described above, and when the moisture content of the rice porridge block is measured in the unfrozen state, it may be measured to have a moisture content within the above range. In addition, when the rice porridge block has the moisture content in the above range, the rice porridge can have an appropriate viscosity and has an effect capable of implementing preferable texture and taste of the porridge.

The rice porridge block may have a solid content of 75% to 85% as measured in the unfrozen state. The solid content may be calculated by subtracting the moisture content from 100(%). Specifically, the solid content may be in a range consisting of a lower limit selected from 75%, 75.5%, 76%, 76.5%, 77%, 77.5%, and 78% and/or an upper limit selected from 85%, 84%, 83%, 82%, 81%, 80%, 79%, 78.5% and 78%. For example, the solids content may be 75% to 85%, 75.5% to 84%, 76% to 83%, 76.5% to 82%, 77% to 81%, 77.5% to 80%, or 78% to 79%. The frozen rice porridge block included in the frozen porridge kit of the present invention has the same effect as described above, and when the solid content of the rice porridge block is measured in the unfrozen state, it may be measured to have a solid content in the above range. In addition, when the rice porridge block has the solid content in the above range, the rice porridge can have an appropriate viscosity and has an effect capable of implementing preferable texture and taste of the porridge.

The rice porridge block may have a salinity of 0.4% to 0.5% as measured in the unfrozen state. Specifically, the salinity may be in a range consisting of a lower limit selected from 0.4%, 0.41%, 0.42%, 0.43%, 0.44% and 0.45% and/or an upper limit selected from 0.5%, 0.49%, 0.48%, 0.47%, 0.46% and 0.45%. For example, the salinity may be 0.4% to 0.5%, 0.41% to 0.49%, 0.42% to 0.48%, 0.43% to 0.47%, 0.44% to 0.46%, 0.44% to 0.45%, or 0.45% to 0.46%. The frozen rice porridge block included in the frozen porridge kit of the present invention has the same effect as described above, and when the salinity of the rice porridge block is measured in the unfrozen state, it may be measured to have a salinity within the above range. In addition, when the rice porridge block shows the salinity in the above range, there is an effect capable of implementing a preferable taste of the porridge.

In the unfrozen state of the rice porridge block, the hardness of the rice grains contained in the rice porridge block may be 300 to 800 as measured by a texture analyzer. Specifically, the hardness of the rice grains contained in the rice porridge block may be in a range consisting of a lower limit selected from 300, 350, 400, 450, 460, 470, 480, 490, 500, 510, 520, 530, 550, 570, 590 and 600, and/or an upper limit selected from 800, 790, 780, 770, 760, 750, 720, 700, 680, 660 and 650. For example, the hardness may be 450 to 800, 460 to 790, 480 to 780, 500 to 750, 530 to 700, 550 to 680, 570 to 660, or 600 to 650. The hardness of rice grains contained in the porridge is a physical property that plays an important role in the texture of the porridge, and when the hardness of the rice grains contained in the rice porridge block is in the above range, the texture of the porridge prepared from the frozen porridge kit including the rice porridge block is excellent, so that there is an effect of meeting the consumer's preference.

In addition, the hardness of the rice grains in the rice porridge block may have a hardness value of 180 to 220, specifically 190 to 210 or 200, greater than the hardness of the rice grains contained in the porridge when the frozen porridge kit of the present invention is thawed to prepare the porridge. Therefore, in consideration of the preferable texture to be implemented in the final porridge product, the hardness of the rice grains contained in the porridge is set, and accordingly, it is possible to configure a frozen porridge kit capable of preparing a porridge with quality to be implemented by setting the hardness of the rice grains contained in the rice porridge when preparing the rice porridge block.

The frozen sauce block may contain at least one selected from the group consisting of vegetables, meat and seafood, but is not limited thereto. Depending on a type of porridge to be finally prepared, various types of raw materials contained in the sauce block may be used, and the sauce block may contain various types of seasoning sauces in addition to the vegetables, meat, seafood, etc. The vegetables may be, for example, carrots, onions, zucchini, broccoli, mushrooms, potatoes, etc., but are not limited thereto, and vegetable materials commonly used in the preparation of the porridge may be used without limitation. The meat may be, for example, chicken, duck, pork, beef, turkey, lamb, etc., and the seafood may be, for example, abalone, squid, octopus, small octopus, shrimp, crab, clam meat, cod, pollock, croaker, mackerel, Spanish mackerel, pacific saury, etc., but is not limited thereto, and meat or seafood ingredients commonly used in the preparation of the porridge may be used without limitation. When the sauce block contains the vegetables, the frozen porridge kit including the sauce block may be a kit for providing a vegetable porridge. However, since vegetables are materials that may also be widely used in other types of porridges in addition to the vegetable porridge, the sauce block included in the kit for preparing other porridges may also contain vegetables. The sauce block may contain the vegetables, meat, seafood, etc. in one block, or may also contain only one of the vegetables, meat, and seafood. In addition, the frozen porridge kit of the present invention may include sauce blocks containing different raw materials. For example, if the porridge to be finally prepared contains both vegetables and meat, the frozen porridge kit may include both a sauce block containing vegetables and a sauce block containing meat, and may include sauce blocks containing various raw materials in various combinations depending on a type of porridge.

The sauce block may further include a seasoning sauce. The seasoning sauce may be applied in various methods depending on the type of porridge to be prepared.

When the sauce block contains vegetables, the sauce block may be prepared by pre-processing the vegetables by washing, cutting, crushing, pressing, heating, blanching, etc., and then mixing the pre-processed vegetables with seasoning sauce and/or water, stirring while heating, and then cooling to make a block form. For example, the vegetables may be cut into predetermined sizes and contained, specifically in cut sizes of 5 mm to 10 mm. In addition, the blanching may be performed by heating for 5 to 10 minutes at a temperature of 80°C to 90°C. The sauce block prepared through the process has an advantage that vegetables as a raw material are fresh, and thus the texture of the vegetables is excellent in the final porridge product, and that the color development of vegetables, the microbial stability, and the like may be secured.

The sauce block may contain vegetables in the content of 40 wt% to 70 wt%. Specifically, the vegetables may be contained in the sauce block in the content range consisting of a lower limit selected from 40 wt%, 42 wt%, 45 wt%, 47 wt%, 50 wt%, 52 wt%, and 55 wt% and/or an upper limit selected from 70 wt%, 68 wt%, 65 wt%, 63 wt%, 60 wt%, 58 wt%, and 55 wt%. For example, the vegetables may be contained in the content of 40 wt% to 70 wt%, 42 wt% to 68 wt%, 45 wt% to 65 wt%, 47 wt% to 63 wt%, 50 wt% to 60 wt%, 52 wt% to 58 wt%, 52 wt% to 55 wt%, or 55 wt% to 58 wt%.

The sauce block may contain meat or seafood in the content of 50 wt% to 65 wt%. Specifically, the meat or seafood may be contained in the content range consisting of a lower limit selected from 50 wt%, 52 wt%, 55 wt% and 57 wt% and/or an upper limit selected from 65 wt%, 63 wt%, 60 wt% and 58 wt%. For example, the meat or seafood may be contained in the content of 50 wt% to 65 wt%, 52 wt% to 63 wt%, 55 wt% to 60 wt%, or 57 wt% to 68 wt%.

The meat or seafood may be contained in the sauce block in a raw material form. When contained in the raw material form, it is meant that the meat or seafood raw material is contained while maintaining its original form, and for example, the meat or seafood ground in small pieces may not be contained. When the meat or seafood is contained in the sauce block in the raw material form, it has an advantage that when the porridge prepared in this way is ingested, the texture of the meat or seafood raw material may be maintained as it is, and thus the texture similar to that of the meat and seafood contained in the porridge prepared through a conventional cooking method may be shown.

The sauce block may further include gums, starch, or a combination thereof. The gums and the starch may show an effect of improving dispersibility by preventing the ingredients contained in the sauce block from sinking too much, and accordingly, in preparing the sauce block, ingredients contained in the sauce block may be evenly contained in each block when filling the ingredient in the mold before freezing. In addition, the gums and the starch have an effect capable of appropriately adjusting the viscosity of the sauce block to easily fill the sauce, and the viscosity of the final porridge product may be also adjusted to an appropriate level for ingesting.

The sauce block may further contain gums in the content of 0.2 wt% to 1.3 wt%. Specifically, the gums may be contained in the sauce block in the content range consisting of a lower limit selected from 0.2 wt%, 0.3 wt%, 0.5 wt%, 0.6 wt % and 0.7 wt% and/or an upper limit selected from 1.3 wt%, 1.2 wt%, 1.0 wt%, 0.9 wt% and 0.8 wt%. For example, the gums may be contained in the content of 0.2 wt% to 1.3 wt%, 0.3 wt% to 1.2 wt%, 0.5 wt% to 1.0 wt%, 0.6 wt% to 0.9 wt% or 0.7 wt% to 0.8 wt%. When the gums are added to the sauce block in the above range, the dispersibility of the solids in the sauce block is improved even with a small addition amount, so that it is possible to prepare a sauce block of constant quality even in mass production of the sauce block and prepare a porridge of sensually superior quality by using the sauce block containing the gums in the above content range.

The gums may be at least one selected from the group consisting of xanthan gum, pectin, carrageenan, gellan gum, locust bean gum, guar gum, agar, and gelatin, specifically, xanthan gum, pectin, or carrageenan, and more specifically, a combination of xanthan gum, pectin, and carrageenan. In addition, gellan gum, locust bean gum, guar gum, or a combination thereof may be used instead of the xanthan gum, agar may be used instead of the pectin, and gelatin may be used instead of the carrageenan, but the gums are not limited thereto.

The sauce block may further contain starch in the content of.5 wt% to 5 wt%. In addition, the starch may be contained in the sauce block in the content range consisting of a lower limit selected from 1.5 wt%, 1.7 wt%, 2 wt%, 2.3 wt%, 2.5 wt%, 2.7 wt%, 3 wt%, 3.2 wt%, 3.5 wt%, and 3.7 wt% and/or an upper limit selected from 5 wt%, 4.8 wt%, 4.5 wt%, 4.2 wt%, and 4 wt%. For example, the starch may be contained in the content of 2.5 wt% to 5 wt%, 2.7 wt% to 4.8 wt%, 3 wt% to 4.5 wt%, 3 wt% to 4.2 wt%, 3.2 wt% to 4.2 wt%, or 3.5 wt% to 4 wt%.The sauce block may have a viscosity of 2 cm to 18 cm as measured in the unfrozen state. Specifically, the viscosity for 100 g of the sauce in the unfrozen state may be measured with a Bostwick consistometer, and the viscosity value may be measured by a distance moved for 15 seconds by adding 100 g of the sauce in the unfrozen state to the Bostwick consistometer. Since the viscosity is measured by the distance moved on the inclined surface of the consistometer for the same time, the higher the viscosity, the smaller the viscosity value is measured. The viscosity may be in a range consisting of a lower limit selected from 2 cm, 3 cm, 4 cm, 5 cm, 6 cm, 7 cm, 7.2 cm, 7.5 cm, 7.7 cm, 8 cm, 8.2 cm, 8.5 cm, 8.7 cm and 9 cm and/or an upper limit selected from 18 cm, 17 cm, 16 cm, 15 cm, 14.8 cm, 14.5 cm, 14 cm, 13.5 cm, 13 cm, 12.5 cm, 12 cm, 11.5 cm, and 11 cm. For example, the viscosity may be 7 cm to 15 cm, 7.5 cm to 14 cm, 8 cm to 13.5 cm, 8.2 cm to 13 cm, 8.5 cm to 12.5 cm, 8.7 cm to 12 cm, 9 cm to 11.5 cm or 9 cm to 11 cm. In addition, when the sauce block includes the gums, the sauce block may have a viscosity as measured in the unfrozen state in the range of 6 cm to 9 cm, specifically 6.2 cm to 9 cm, 6.5 cm to 9 cm, 7 cm to 8.8 cm, 7.2 cm to 8.5 cm, 7.5 cm to 8 cm, or 7.6 cm to 7.9 cm, and in this case, the sauce block may not contain starch.

When the viscosity of the sauce block in the unfrozen state is in the above range, the solids do not sink too much in the sauce, and thus dispersibility is good and the viscosity is not too high while having a viscosity suitable for eating, so that there is no difficulty in a process of filling the sauce in a mold before freezing, thereby increasing the preparation efficiency.

The sauce block may have a moisture content of 87% to 94% as measured in the unfrozen state. The moisture content may be calculated as a percentage by dividing a difference value between the mass of the sauce block before drying at a high temperature and the mass after drying by the mass before drying, and for example, the drying may be left at 105°C for 20 hours. Specifically, the moisture content may be in a range consisting of a lower limit selected from 87%, 88%, 89%, 89.5%, and 90% and/or an upper limit selected from 94%, 93%, 92%, 91.5%, and 91%. For example, the moisture content may be 87% to 94%, 88% to 93%, 89% to 92%, 89.5% to 91.5%, or 90% to 91%. The frozen sauce block included in the frozen porridge kit of the present invention has the same effect as described above, and when the moisture content of the sauce block is measured in the unfrozen state, it may be measured to have a moisture content in the above range. In addition, when the sauce block has the moisture content in the above range, the sauce can have an appropriate viscosity and has an effect capable of implementing preferable texture and taste of the porridge.

The sauce block may have a solid content of 6% to 13% as measured in the unfrozen state. The solid content may be calculated by subtracting the moisture content from 100(%). Specifically, the solid content may be in a range consisting of a lower limit selected from 6%, 7%, 8%, 8.5%, and 9% and/or an upper limit selected from 13%, 12%, 11.5%, 11%, and 10%. For example, the solid content may be 6% to 13%, 7% to 12%, 8% to 11%, 8.5% to 10.5%, or 9% to 10%. The frozen sauce block included in the frozen porridge kit of the present invention has the same effect as described above, and when the solid content of the sauce block is measured in the unfrozen state, it may be measured to have a solid content in the above range. In addition, when the sauce block has the solid content in the above range, the sauce can have an appropriate viscosity and has an effect capable of implementing preferable texture and taste of the porridge.

The sauce block may have a salinity of 1.3% to 1.8% as measured in the unfrozen state. Specifically, the salinity may be in a range consisting of a lower limit selected from 1.3%, 1.35%, 1.4%, 1.45%, and 1.5% and/or an upper limit selected from 1.8%, 1.75%, 1.7%, 1.65%, 1.6%, and 1.55%. For example, the salinity may be 1.3% to 1.8%, 1.35% to 1.75%, 1.4% to 1.7%, 1.45% to 1.65%, 1.45% to 1.6%, 1.45% to 1.55%, or 1.5% to 1.55%. The sauce block included in the frozen porridge kit of the present invention has the same effect as described above, and when the salinity of the sauce block is measured in the unfrozen state, it may be measured to have a salinity in the above range. In addition, when the sauce block shows the salinity in the above range, there is an effect capable of implementing a preferable taste of the porridge.

At least one of the frozen rice porridge block and the frozen sauce block may have grooves or holes formed on the surface thereof. The block formed with the grooves and/or holes may have an effect of shortening the time taken to be molten into an edible porridge shape in the process of thawing the porridge kit of the present invention, and the reduction rate of cooking time compared to the surface area thereof may be increased.

The groove may not penetrate through the block. In addition, the groove may be formed in a column shape on one side of the block, and may be formed, for example, in a half cylindrical or hexagonal column shape, but is not limited thereto, and the groove may be in the form of extending from one end to the other end of one side of the block where the groove exists. A plurality of the grooves may be present on one side of the block or present on several surfaces thereof. In addition, the plurality of grooves may be formed by crossing each other on one side the block.

The volume of the groove may be 2% to 20% based on the total block volume. Specifically, the volume of the groove may be 2.5% to 18%, 3% to 17%, 3.5% to 15%, 4% to 13%, 4.5% to 12.5%, or 5% to 12% based on the total block volume, but is not limited thereto. When the volume of the groove formed in the block is in the above range, there is an advantage in that the shape of the frozen block can be maintained because the block is not broken due to the formation of the groove while the effect of shortening the cooking time is sufficiently shown. In addition, the groove may have a depth of, for example, 1 cm to 3 cm, and when the groove has a half cylindrical shape, the groove may be a half cylindrical column with a diameter of 0.4 cm to 0.6 cm, but is not limited thereto. In a specific embodiment of the present invention, a half cylindrical groove with a radius of 0.5 cm and a length (height) of 7 cm is formed on a block in the form of a hexagonal column with a width of 7 cm, a length of 3 cm and a height of 2 cm to prepare the block, and it was confirmed that there is an effect of shortening the cooking time when the block is heated.

The hole may be formed by penetrating through the block. The hole may be formed in various shapes such as a cylinder or a hexagonal column, and the shape of the hole may also vary depending on a shape of the block. For example, when the block is a rectangular parallelepiped, the hole may penetrate through two parallel sides of the block. A plurality of the holes may exist in the block, and for example, there may be two holes. In addition, the plurality of holes may all exist on one side of the block or exist on several sides thereof, and holes penetrating through the block may be formed by crossing each other. The hole may be, for example, in the form of a cylinder having a radius of 0.4 cm to 0.6 cm, but is not limited thereto, and the height of the cylinder may vary depending on a size of the block, but may be, for example, 1 cm to 3 cm.

The frozen rice porridge block and the frozen sauce block may be frozen at a temperature of - 160°C to - 15°C for 20 minutes to 3 hours. Specifically, the frozen block may be frozen at a temperature of - 150°C to - 15°C, - 100°C to - 17°C, - 50°C to - 17°C, - 40°C to - 18°C, or - 38°C to - 18°C for 25 minutes to 2 hours and 30 minutes or 30 minutes to 2 hours.

The number of frozen rice porridge blocks and the number of frozen sauce blocks may be in a ratio of 5: 5 to 9: 1. The frozen porridge kit of the present invention may include a plurality of rice porridge blocks and a plurality of sauce blocks, and the taste, type, and the like of finally provided frozen porridge may vary depending on the number of the rice porridge blocks and sauce blocks. Specifically, the frozen rice porridge block and the frozen sauce block may be included in the frozen porridge kit of the present invention in a ratio of 5: 5 to 9: 1, 5.5: 4.5 to 8.5: 1.5, 6: 4 to 8: 2, 6.5: 3.5 to 7.5: 2.5, 7: 3 to 8: 2 or 6: 3 to 7: 3. When the rice porridge block and the sauce block are included in the frozen porridge kit at a ratio in the above range, the properties, taste, texture, viscosity, salinity, etc. of the finally prepared porridge are formed in appropriate ranges to prepare a porridge with excellent quality.

The frozen porridge kit of the present invention may further include a packaging material. At this time, the frozen rice porridge block and the frozen sauce block may be filled in the packaging material.

Another aspect of the present invention provides a method for preparing a porridge.

The preparing method of the porridge includes thawing the frozen porridge kit. The description of the frozen porridge kit is the same as described above. Depending on the type of porridge to be provided in the frozen porridge kit, the type of porridge prepared through the preparing method may also vary.

The thawing may include thawing or heating the frozen porridge kit at room temperature. In addition, the thawing may further include adding water to the frozen porridge kit. The thawing may be thawing at room temperature after adding water or also thawing by heating after adding water. The heating of the frozen porridge kit is not limited to the method, but for example, the rice porridge block and the sauce block contained in the frozen porridge kit may be transferred to a heating container and heated, and the rice porridge block and the sauce block may be heated while being filled in a packaging material. In addition, the heating may be heating using a microwave or gas range.

The adding of water to the frozen porridge kit may be adding 10 to 45 parts by weight of water, and specifically, adding water of 11 to 42 parts by weight, 12 to 40 parts by weight, 15 to 35 parts by weight, 20 to 30 parts by weight, 12 to 25 parts by weight, 13 to 24 parts by weight, 25 to 45 parts by weight, 27 to 42 parts by weight, or 30 to 40 parts by weight, based on 100 parts by weight of the total block included in the kit. In addition, in the adding of water, the amount of water to be added may vary depending on a heating method, but when heating using a microwave oven, 10 to 25 parts by weight of water may be added based on 100 parts by weight of the total block included in the kit, and when heating using a gas range, 27 to 42 parts by weight of water may be added based on 100 parts by weight of the total block included in the kit. When the water is added in the above range, there is an advantage that the porridge has a preferable viscosity after being thawed to prepare a porridge with excellent texture, and the moisture content, solid content, salinity, etc. are appropriately controlled to prepare a porridge with excellent taste quality.

For example, when the frozen porridge kit is heated using the microwave oven, the frozen porridge kit may be heated and thawed for 5 to 8 minutes based on 700 W after adding 40 to 70 g of water based on 300 g of the total block. Meanwhile, when the frozen porridge kit is transferred to a heating container and heated with a gas range, etc., the frozen porridge kit may be heated and thawed for 4 to 7 minutes based on high heat after adding 90 to 120 g of water based on 300 g of the total block. When thawed under the conditions and ranges, all frozen blocks in the frozen porridge kit may be thawed, and a preferable porridge texture may be implemented.

The method for preparing the porridge of the present invention has an advantage of being able to easily prepare a porridge at the same level as cooked an sold at porridge specialty stores, even if a simple process of thawing the frozen porridge kit is performed, and even users who are not familiar with cooking can prepare a high-quality porridge without difficulty.

Yet another aspect of the present invention provides a porridge.

The porridge is prepared by the preparation method of the porridge, and may be prepared through the step of thawing the frozen porridge kit. Accordingly, depending on the type of porridge to be provided in the frozen porridge kit, the type of the porridge may also vary. The description of the frozen porridge kit is the same as described above.

The porridge may be a vegetable porridge, a mushroom porridge, an abalone porridge, a seafood porridge, a red bean porridge, a pumpkin porridge, etc., but is not limited thereto, and the type of porridge may vary depending on the type of raw material contained in the sauce block included in the frozen porridge kit.

The viscosity of the porridge may be 3 cm to 5 cm. Specifically, the viscosity for 100 g of the porridge may be measured with a Bostwick consistometer, and the viscosity value may be measured by a distance moved for 15 seconds by adding 100 g of the porridge in the unfrozen state to the Bostwick consistometer. Since the viscosity is measured by the distance moved on the inclined surface of the consistometer for the same time, the higher the viscosity, the smaller the viscosity value is measured. The viscosity may be in a range consisting of a lower limit selected from 3 cm, 3.2 cm, 3.5 cm, 3.7 cm and 4 cm and/or an upper limit selected from 5 cm, 4.8 cm, 4.5 cm, 4.2 cm and 4 cm. For example, the viscosity may be 3 cm to 5 cm, 3.2 cm to 4.8 cm, 3.5 cm to 4.5 cm, 3.7 cm to 4.3 cm, 4 cm to 4.3 cm, or 3.7 cm to 4 cm.

The porridge may have a moisture content of 80% to 90%. The moisture content may be calculated as a percentage by dividing a difference value between the mass of the porridge before drying at a high temperature and the mass after drying by the mass before drying, and for example, the drying may be left at 105°C for 20 hours. Specifically, the moisture content may be in a range consisting of a lower limit selected from 80%, 81%, 82%, 83%, 84%, 84.5% and 85% and/or an upper limit selected from 90%, 89%, 88%, 87%, 86%, 85.5% and 85%. For example, the moisture content may be 80% to 90%, 81% to 89%, 82% to 88%, 83% to 87%, 84% to 86%, 84.5% to 85.5%, 85% to 86% or 84% to 85%.

The porridge may have a solid content of 12% to 17%. The solid content may be calculated by subtracting the moisture content from 100(%). Specifically, the solid content may be in a range consisting of a lower limit selected from 12%, 12.5%, 13%, 13.5%, 14% and 14.5% and/or an upper limit selected from 17%, 16.5%, 16%, 15.5%, 15% and 14.5%. For example, the solid content may be 12% to 17%, 12.5% to 16.5%, 13% to 16%, 13.5% to 15.5%, 14% to 15%, 14.5% to 15%, or 14% to 14.5%.

The hardness of rice grains contained in the porridge measured by a texture analyzer may be 250 to 600. Specifically, the hardness of the rice grains contained in the rice porridge block may be in a range consisting of a lower limit selected from 250, 260, 270, 280, 290, 300, 310, 320, 330, 350, 370, 390 and 400, and/or an upper limit selected from 600, 590, 580, 570, 560, 550, 520, 500, 480, 460 and 450. For example, the hardness may be 250 to 600, 260 to 590, 280 to 580, 300 to 550, 330 to 500, 350 to 480, 370 to 460, or 400 to 450.

When the viscosity, moisture content and/or solid content of the porridge of the present invention is in the above range or the hardness of the rice contained in the porridge is in the above range, the porridge has properties suitable for eating to have an excellent texture and implement preferable taste quality.

### [Advantageous Effects]

The present invention relates to a frozen porridge kit capable of preparing a porridge by a simple process of thawing, and the present invention provides a frozen porridge kit for preparing a porridge that can be ingested without a separate cooking process. The porridge prepared using the frozen porridge kit has excellent texture because raw materials such as meat, seafood, and the like contained in the frozen porridge kit may maintain the original shapes of the ingredients, and has the same excellent quality as porridges prepared/sold in porridge specialty stores.

In addition, the frozen porridge kit of the present invention includes a frozen rice porridge block and a sauce block, so that it is possible to combine various types of sauce blocks such as a vegetable sauce block, a meat sauce block, and a seafood sauce block according to a difference in raw ingredients contained in the sauce blocks, and to easily configure a kit according to the type of porridge to be prepared. In addition, since the kit is provided by adjusting the number and ratio of respective blocks, there are advantages in that it is possible for users who are not familiar with cooking to easily prepare a high-quality of porridge even without measuring or mixing raw materials according to a volume and to easily prepare a porridge with various tastes by adjusting the number of respective blocks according to a preference.

Since the rice porridge block and the sauce block of the present invention are characterized by improved dispersibility and viscosity, the raw ingredients contained in the block can be uniformly contained in each block in the process of preparing the blocks, and the filling efficiency is also excellent due to appropriate flowability.

However, the effects of the present invention are not limited to the above-mentioned effects, and other effects not mentioned will be clearly understood by those skilled in the art from the following description.

### [Description of Drawings]

FIG. 1 is a drawing and a photograph showing rice porridge blocks of Preparation Examples 2-1 to 2-4, in which grooves or holes are formed in the rice porridge blocks.
FIG. 2 is a photograph taken by confirming the dispersibility of sauce blocks of Preparation Examples 3-1 to 3-6 prepared by adding gums or starch to the sauce block containing vegetables.

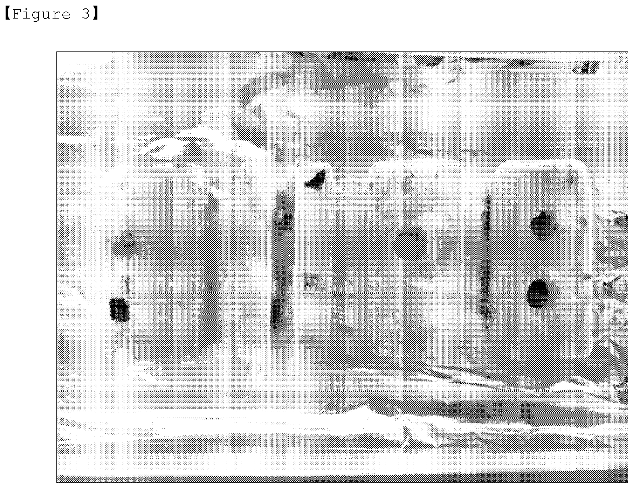

FIG. 3 is a photograph showing sauce blocks of Preparation Examples 4-1 to 4-4, in which grooves or holes are formed in the sauce blocks.

Hereinafter, the present invention will be described in detail by Examples.

However, the following Examples specifically illustrate the present invention, and the content of the present invention is not limited by the following Examples.

### [Example 1]

### Preparation of rice porridge block and confirmation of physical properties thereof

A rice porridge block included in a frozen porridge kit of the present invention and serving as a base porridge in the entire frozen porridge composition was prepared, and various physicochemical properties thereof were confirmed.

### [1-1] Preparation of rice porridge block

A rice porridge block included in a frozen porridge kit of the present invention is prepared by using glutinous rice and nonglutinous rice as main ingredients. At this time, the rice porridge blocks of Preparation Examples 1-1 to 1-4 are prepared so that the contents of rice contained in the blocks are 21%, 23%, 25% and 27% based on the entire rice porridge block. A composition ratio of each ingredient contained in the rice porridge blocks of Preparation Examples 1-1 to 1-4 is shown in Table 1 below.

Specifically, nonglutinous rice and glutinous rice are washed with water and soaked in water for 2 hours, and then the water is removed and mixed with the raw materials according to Table 1 below. Then, the mixed raw materials are stirred while heating at 90°C for 10 minutes to make a porridge shape, and then filled in a rectangular parallelepiped mold and rapidly cooled at a temperature of - 38°C to - 18°C for 30 minutes to 2 hours to prepare a rice porridge block.

**[Table 1]**

| Name of raw material | Preparation Example 1-1 (rice 21%) | Preparation Example 1-2 (rice 23%) | Preparation Example 1-3 (rice 25%) | Preparation Example 1-4 (rice 27%) |
|---|---|---|---|---|
| Soaked nonglutinous rice | 15 | 17 | 19 | 21 |
| Soaked glutinous rice | 6 | 6 | 6 | 6 |
| Purified water | 77.5 | 75.5 | 73.5 | 71.5 |
| Other additives (refined salt, sesame oil, modified starch) | 1.5 | 1.5 | 1.5 | 1.5 |
| Total | 100 | 100 | 100 | 100 |

### [1-2] Confirmation of viscosity of rice porridge according to the content of rice

Due to the property of the porridge, the viscosity may be a major factor in determining the quality by affecting the texture and the taste of the porridge, and the viscosity of the porridge is also related to the ease of filling in the process of preparing a frozen block. Accordingly, the viscosity of the rice porridge prepared in Preparation Examples 1-1 to 1-4 prepared through [Example 1-1] was measured.

In the state before freezing the rice porridges of Preparation Examples 1-1 to 1-4 mixed according to Table 1 above, a distance of the sample moved for 15 seconds at 75°C was measured using a Bostwick consistometer for 100 g of each sample to confirm the viscosity. As a result, as shown in Table 2 below, it was confirmed that as the rice content of the rice porridge is higher, a distance moved for the same time is shorter, the smaller viscosity value was measured, and the viscosity was higher. This is expected that the higher the content of rice, the stronger the viscosity as the eluted amount of starch increases.

**[Table 2]**

| | Preparation Example 1-1 (rice 21%) | Preparation Example 1-2 (rice 23%) | Preparation Example 1-3 (rice 25%) | Preparation Example 1-4 (rice 27%) |
|---|---|---|---|---|
| Viscosity (cm) | 21.0 | 12.7 | 5.1 | 3.9 |

When the content of rice contained in the rice porridge was less than 23% (Preparation Example 1-1), the viscosity was low and thus the dispersibility of rice grains was too low, and when the content of rice was 27% or more (Preparation Example 1-4), the viscosity was too strong and thus the flowability was lowered, so that it was difficult to fill the rice porridge and thus it was unsuitable. Accordingly, when the rice content was in the range of 22% to 26% in preparing the rice porridge block, it was confirmed that the viscosity range was measured at about 4 cm to 18 cm, so that the rice porridge with both appropriate dispersibility and flowability could be prepared.

### [1-3] Measurement of moisture, solid content, salinity and hardness of rice porridge according to rice content

Various physicochemical properties were measured for the rice porridges of Preparation Examples 1-2 and 1-3 that were confirmed to have an appropriate viscosity through [Example 1-2] above. Specifically, the moisture content, solid content and salinity contained in the rice porridge were measured, and the hardness of rice grains in the rice porridge was measured.

In the case of the moisture content, 7 to 8 g of rice porridge samples of Preparation Examples 1-2 and 1-3 were taken in a weighing dish and the moisture content thereof was measured using a dry oven. The dish containing the sample was left at 105°C for 20 hours, and then the mass before and after drying was measured, and a reduced mass value was measured with a moisture amount. That is, the moisture content in the rice porridge was calculated through Equation of `moisture content (%) = 100 × (B-C)/(B-A)' (A: mass (g) of weighing dish, B: mass (g) of weighing dish and sample (rice porridge) before drying, C: mass (g) of weighing dish and sample (rice porridge) after drying.

In the case of the solid content contained in the rice porridge, the solid content was derived using the moisture content value measured as above. The solid content in the rice porridge was calculated through Equation of 'solid content (%) = 100 - moisture content (%)'.

In order to measure the salinity of the rice porridge, the rice porridge samples of Preparation Examples 1-2 and 1-3 were added with 10-fold water and then homogenized with a mixer. In addition, a zero point was calibrated with distilled water using a salt meter (ES-421, ATAGE Co.), and then the salinity of the homogenized sample was measured.

**[Table 3]**

| | Moisture content (%) | Solid content (%) | Salinity (%) |
|---|---|---|---|
| Preparation Example 1-2 (rice 23%) | 19.33 | 80.67 | 0.46 |
| Preparation Example 1-3 (rice 25%) | 22.19 | 77.81 | 0.48 |

The moisture content, solid content and salinity of the rice porridge blocks of the present invention measured through the method were measured as described in Table 3 above, and the salinity was similarly measured. That is, when the rice porridge was prepared with the content of rice contained in the rice porridge at about 22% to 26%, it was confirmed that the rice porridges having the properties shown in Table 3 were prepared.

Meanwhile, the hardness of the rice grains of the rice porridge was measured using a texture analyzer (TA-XT Plus Texture Analyzer, Stable Micro Systems Co., Ltd.). Specifically, the rice porridge mixtures of Preparation Examples 1-2 and 1-3 were rinsed with water, 7 g of rice grain samples contained therein were uniformly added in a cylindrical container having a diameter of 30 mm, and then the hardness thereof was measured under the following analysis conditions through the texture analyzer.

### <Hardness measurement conditions>

- Probe: Cylindrical shape with diameter of 2 cm
- Speed at which the probe descended to the sample (pre-test speed): 5.00 mm/sec
- Speed of penetrating through the sample after the probe was in contact with the surface of the sample (test speed): 5.0 mm/sec
- Speed at which the probe returned to its original position after penetrating through the sample (post-test speed): 5.0 mm/sec
- Target mode of the probe: Distance
- Distance at which the probe recognized the surface of the sample and penetrated through the sample: 5.0 mm
- Conditions for the probe to recognize the sample (trigger type): Force
- Minimum force for the probe to recognize the presence of the sample (trigger force): 10.0 g

The hardness of the rice grains in the rice porridge was measured by setting the analysis conditions of the texture analyzer under the same conditions as above, and an average value was shown in Table 4 below by measuring the hardness a total of three times under the same conditions.

**[Table 4]**

| | Preparation Example 1-2 (rice 23%) | Preparation Example 1-3 (rice 25%) |
|---|---|---|
| Hardness | 730.063 | 574.481 |

As a result, it was measured that the higher the rice content contained in the rice porridge, the lower the hardness of the rice grains. That is, when the rice porridge was prepared with the content of rice contained in the rice porridge at about 22% to 26%, it was confirmed that the rice porridges containing the rice grains having the hardness values shown in Table 4 above were prepared. The hardness of the rice grains of the rice porridge of Preparation Example 1-2 was a somewhat hard texture, and the hardness of the rice grains of the rice porridge of Preparation Example 1-3 was a firm texture. This is expected that since the higher the content of rice in the stirring process after mixing the raw materials of the rice porridge, the higher the density of the solids, so that the higher the frequency of collision or friction between rice particles, the higher the water penetration into the tissue and gelatinization was promoted, the hardness was lowered.

### [Example 2]

### Confirmation of cooking time according to shape of frozen rice porridge block

A frozen rice porridge block was prepared by filling 30 g of the rice porridge prepared at the mixing ratio according to Preparation Example 1-2 into a mold and rapidly freezing the rice porridge, and the time required for the rice porridge block to become porridge shape was measured to confirm what shape the frozen block had when the cooking time was short compared to the surface area.

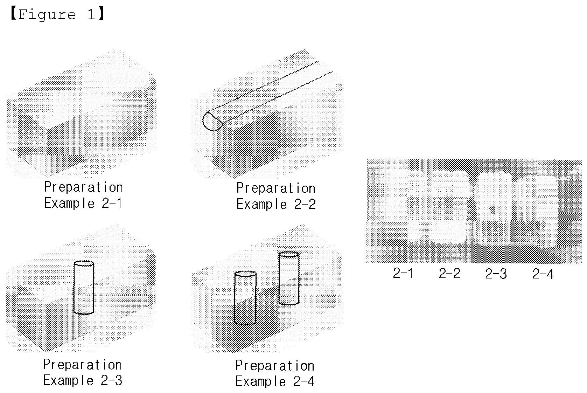

At this time, as shown in FIG. 1, four shapes of rice porridge blocks were prepared by forming grooves or holes in various shapes on the surface of the rice porridge block. 7 rice porridge blocks having each of four shapes were prepared, in which the four-shaped rice porridge blocks were a rectangular parallelepiped rice porridge block without any treatment on the surface (Preparation Example 2-1), a rice porridge block having a shape with a half cylindrical groove having a radius of 0.5 cm on one side of a rectangular parallelepiped (Preparation Example 2-2), a rice porridge block having a shape pierced with a cylindrical hole having a radius of 0.5 cm penetrating through two parallel sides of a rectangular parallelepiped (Preparation Example 2-3), and a rice porridge block having a shape pierced with the two holes of Preparation Example 2-3 (Preparation Example 2-4).

30 g of each of the 7 prepared frozen rice porridge blocks of Preparation Examples 2-1 to 2-4 was added with 100 g of purified water, the frozen blocks were melted to form an edible porridge, and the time taken until this time was measured and compared (Table 5).

**[Table 5]**

| Block shape | Cooking time (sec) | Surface area (cm2) | Compared to Preparation Example 2-1 | | |
|---|---|---|---|---|---|
| | | | Cooking time reduction rate (%) | Surface area increase rate (%) | Cooking time reduction rate to surface area increase rate (%) |
| Preparation Example 2-1 | 245 | 75.3988 | - | - | - |
| Preparation Example 2-2 | 210 | 77.3115 | 14.28571429 | 2.536777774 | 5.63144097 |
| Preparation Example 2-3 | 230 | 79.4811 | 6.12244898 | 5.41427715 | 1.130797115 |
| Preparation Example 2-4 | 207 | 83.5633 | 15.51020408 | 10.82842167 | 1.432360555 |

As a result, the cooking time of the rice porridge block of Preparation Example 2-1 having a rectangular parallelepiped shape without any grooves or holes on the surface was the longest, and the cooking time of the rice porridge block of Example 2-4 having two cylindrical holes was the shortest. However, when considering an increase in surface area that occurred when the grooves or holes were made, the frozen rice porridge block of Preparation Example 2-2 had the best cooking time reduction rate to a surface area increase rate. Therefore, it was confirmed that the rice porridge block having a shape with a half cylindrical groove on one surface of the rectangular parallelepiped block could exhibit the most efficient edible porridge form when water was added.

### [Example 3]

### Preparation of vegetable-containing sauce block and confirmation of dispersibility and viscosity improvement effect thereof

### [3-1] Preparation of vegetable-containing sauce block and confirmation of physical properties thereof

Among the sauce blocks included in the frozen porridge kit of the present invention, a sauce block containing vegetables was prepared, and various physicochemical properties thereof were confirmed.

The vegetable-containing sauce block included in the frozen porridge kit of the present invention was prepared using vegetables such as carrots and zucchini as a main ingredient. Carrot, onion, zucchini, broccoli, mushroom and potato were used as a solid raw material, and these vegetables were cut and then blended in boiling water. The solid raw material was made to be 55 wt% with respect to the total 100 wt%, and 6.3 wt% of a liquid raw material (green onion extract, chicken stock, brisket concentrate, sesame oil and oyster sauce), 2.04 wt% of a powdered raw material (nucleic acid seasoning, refined salt and vegetable stock powder), and 36.66 wt% of purified water were added and blended thereto. The mixed raw materials were stirred while heating at 70°C for 10 minutes to form a porridge, and then filled in a rectangular parallelepiped mold and rapidly cooled to prepare a frozen vegetable-containing sauce block (Preparation Example 3-1) .

In addition, before filling and cooling the vegetable-containing sauce block of Preparation Example 3-1, the moisture content, solid content and salinity thereof were measured. The same method as the method for measuring the physical properties in [Example 1-3] was used, and the measurement results were shown in Table 6 below.

**[Table 6]**

| | Moisture content (%) | Solid content (%) | Salinity (%) |
|---|---|---|---|
| Preparation Example 3-1 (sauce block containing vegetables) | 89.02-91.27 | 8.73-10.98 | 1.50 |

It was confirmed that the vegetable-containing sauce block prepared according to the mixing ratio showed the moisture content, solid content, and salinity values as shown in Table 6 above. However, in the vegetable-containing sauce prepared as described above, the dispersibility of the vegetable solids contained in the sauce was not uniform, and the vegetable solids tended to sink downward under the influence of gravity.

### [3-2] Improvement of dispersibility and viscosity of vegetable-containing sauce block

It was a natural phenomenon that the solids sank in the mixture under the influence of gravity, but when filling the blended solution to mass-produce the vegetable-containing sauce block, there may be a problem that the vegetables were not uniformly filled in each block when the solids sank. In order to improve the dispersibility of the vegetable-containing sauce, a gum mix or starch was further added, and then an effect of improving the dispersibility was confirmed as compared with the vegetable-containing sauce of Preparation Example 3-1.

As the gum mix, a gum mix made by mixing xanthan gum, pectin and carrageenan was used, and 0.5 wt% of the gum mix was added to the vegetable-containing sauce prepared through [Example 3-1] above (Preparation Example 3-2), or 1.0 wt% of the gum mix was added (Preparation Example 3-3) to prepare the vegetable-containing sauce. In the case of starch, waxy corn starch was added to the vegetable-containing sauce in an amount of 2.0 wt% (Preparation Example 3-4), 3.0 wt% (Preparation Example 3-5), and 4.0 wt% (Preparation Example 3-6), respectively. The dispersibility of each sauce mixture was compared by visually observing the degree of sinking of vegetable solids in each vegetable-containing sauce mixture prepared above.

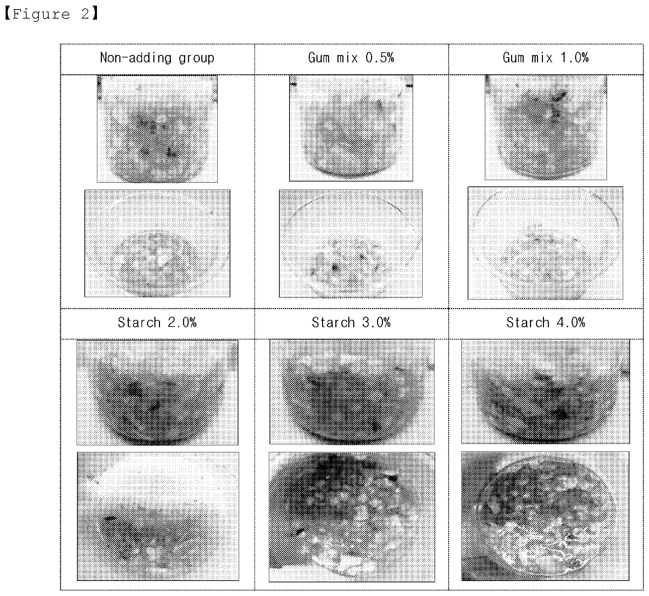

As a result, compared to Preparation Example 3-1 of a non-added group in which no gum mix or starch was added, it was confirmed that the vegetable-containing sauce added with the gum mix had improved dispersibility in both Preparation Examples 3-2 and 3-3 (0.5 wt% and 1.0 wt%) so that the vegetables were less sinking. In the case of a starch-added group, the effect of improving the dispersibility was observed in Preparation Examples 3-5 and 3-6 in which 3.0 wt% and 4.0 wt% of starch were added, respectively (FIG. 2).

In addition, with respect to the vegetable-containing sauce mixtures of Preparation Examples 3-1 to 3-6, with or without the addition of the gum mix or starch, the viscosity was measured and compared in the same manner as in [Example 1-2] above (Table 7).

**[Table 7]**

| | Preparation Example 3-1 | Preparation Example 3-2 (gums 0.5%) | Preparation Example 3-3 (gums 1%) | Preparation Example 3-4 (starch 2%) | Preparation Example 3-5 (starch 3%) | Preparation Example 3-6 (starch 4%) |
|---|---|---|---|---|---|---|
| Viscosity (cm) | Unmeasurable (24) | 7.9 | 7.6 | 14.2 | 10.5 | 9.2 |

As a result, in the case of Preparation Example 3-1, which was the vegetable-containing sauce to which gums or starches were not added, the viscosity value was measured as 24 cm, showing flowability similar to that of water. However, in the case of Preparation Examples 3-2 to 3-6 prepared by further adding the gums or starch, it was confirmed that the viscosity was measured within about 4 cm to 18 cm and shown in an appropriate range, which was suitable for preparing a frozen block with the solids.

Furthermore, in the case of Preparation Examples 3-2 and 3-3 added with gums, it was confirmed that the viscosity of about 7.6 to 7.9 cm was implemented even with a small added amount, thereby improving the dispersibility of the solids in the sauce block.

### [Example 4]

### Confirmation of cooking time according to shape of frozen vegetable-containing sauce block

In addition to confirming the cooking time according to a block shape for the frozen rice porridge block in [Example 2] above, a frozen sauce block was prepared by filling a mold with 30 g of the vegetable-containing sauce prepared according to the mixing ratio according to Preparation Example 3-1 and quickly freezing the sauce. By measuring the time required for the sauce block to become a porridge shape, it was confirmed what shape the frozen block was when the cooking time was short compared to the surface area.

At this time, 7 sauce blocks having each of four shapes were prepared (FIG, 3), in which the four-shaped sauce blocks were a rectangular parallelepiped sauce block without any treatment on the surface (Preparation Example 4-1), a sauce block having a shape with a half cylindrical groove having a radius of 0.5 cm on one side of a rectangular parallelepiped (Preparation Example 4-2), a sauce block having a shape pierced with a cylindrical hole having a radius of 0.5 cm penetrating through two parallel sides of a rectangular parallelepiped (Preparation Example 4-3), and a sauce block having a shape pierced with the two holes of Preparation Example 4-3 (Preparation Example 4-4).

30 g of each of the 7 prepared frozen sauce blocks of Preparation Examples 4-1 to 4-4 was added with 100 g of purified water, the frozen blocks were melted to form an edible porridge shape, and the time taken until this time was measured and compared (Table 8).

**[Table 8]**

| Block shape | Cooking time (sec) | Surface area (cm2) | Compared to Preparation Example 4-1 | | |
|---|---|---|---|---|---|
| | | | Cooking time reduction rate (%) | Surface area increase rate (%) | Cooking time reduction rate relative to surface area increase rate (%) |
| Preparation Example 4-1 | 152 | 75.3988 | - | - | - |
| Preparation Example 4-2 | 140 | 77.3115 | 7.894736842 | 2.536777774 | 3.112112115 |
| Preparation Example 4-3 | 154 | 79.4811 | -1.315789474 | 5.41427715 | -0.243022187 |
| Preparation Example 4-4 | 146 | 83.5633 | 3.947368421 | 10.82842167 | 0.364537745 |

As a result, the cooking time of the sauce block of Example 4-3 with one cylindrical hole was the longest, and the cooking time of the sauce block of Example 4-2 with a half cylindrical groove was the shortest. The sauce block of Preparation Example 4-2 showed the best cooking time reduction rate relative to the surface area increase rate.

### [Example 5]

### Preparation of vegetable porridge and physical properties and sensory analysis thereof

### [5-1] Preparation of vegetable porridge and confirmation of moisture, solid content, viscosity and hardness thereof

The rice porridge block with 23% of the rice content prepared in [Example 1] above (Preparation Example 1-2) and the three vegetable-containing sauce blocks prepared in [Example 3] (Preparation Examples 3-1, 3-2 and 3-5) were used to prepare a vegetable porridge. Specifically, the 7 rice porridge blocks and the 3 vegetable-containing sauce blocks were contained into a container, added with 50 g of purified water, sealed with a wrap, and then heated and cooked in a 700 W microwave oven for 6 minutes to prepare a vegetable porridge. Vegetable porridges of Preparation Examples 5-1 to 5-3 were prepared according to whether a gum mix or starch is contained in the sauce blocks (Table 9).

**[Table 9]**

| | Preparation Example 5-1 (gums and starch non-added group) | Preparation Example 5-2 (gum mix, 0.5%) | Preparation Example 5-3 (starch 3.0%) |
|---|---|---|---|
| Rice porridge block | 7 rice porridge blocks of 23% (Preparation Example 1-2) | 7 rice porridge blocks of 23% (Preparation Example 1-2) | 7 rice porridge blocks of 23% (Preparation Example 1-2) |
| Sauce block | 3 sauce blocks (Preparation Example 3-1) | 3 sauce blocks (Preparation Example 3-2) | 3 sauce blocks (Preparation Example 3-5) |
| Purified water | 50 g | 50 g | 50 g |

In addition, for the vegetable porridges of Preparation Examples 5-1 to 5-3 prepared as described above, the moisture content, solid content and viscosity were measured in the same manner as in [Example 1-2] and [Example 1-3] (Table 10). In addition, for a vegetable porridge containing 23% rice prepared using the rice porridge block of Preparation Example 1-2 and a vegetable porridge containing 25% rice prepared using the rice porridge block of Preparation Example 1-3, the hardness of the rice grains contained in the vegetable porridge was measured in the same manner as in [Example 1-3] above (Table 11). As a result, it was confirmed that in the vegetable porridge prepared by adding a gum mix or starch, the solid content was partially increased, and the viscosity value measured in the finished vegetable porridge was small, so that the viscosity increased. In addition, it was confirmed that the hardness of the rice grains after cooking was lower than that of the rice grains before cooking, which showed a soft texture that was easy to be taken, and specifically, it was confirmed that the hardness of the rice after cooking was about 200 lower than the hardness of the rice before cooking.

**[Table 10]**

| | Moisture content (%) | Solid content (%) | Viscosity (cm) |
|---|---|---|---|
| Preparation Example 5-1 (gums and starch non-added group) | 86.08 | 13.92 | 4.5 |
| Preparation Example 5-2 (gum mix 0.5%) | 85.43 | 14.57 | 3.2 |
| Preparation Example 5-3 (starch 3.0%) | 83.82 | 16.18 | 3,5 |

**[Table 11]**

| | Rice 230 | Rice 25% |
|---|---|---|
| Hardness | 582.888 | 340.295 |

### [5-2] Sensory evaluation of vegetable porridge

In order to confirm a sensory difference between vegetable porridges according to the addition of gums or starch, 30 trained professional panelists ate the vegetable porridges of Preparation Examples 5-2 and 5-3 above, and then evaluated porridge texture, rice texture, vegetable texture, porridge physical properties, and preference of vegetable taste including the overall preference of each vegetable porridge, and evaluated the strength of weird taste and smell shown in the vegetable porridge. Each time the evaluation of one sample was completed, the mouth was washed with water, and the next sample was evaluated after 1 minute had elapsed, and the higher the preference or strength, the closer to 5 points from 0 point. The top 2% in Table 12 below means a ratio of the panels evaluated with a preference opinion of good (4 points) and very good (5 points) in the sensory evaluation.

**[Table 12]**

| | Preparation Example 5-2 (gum mix, 0.5%) | | Preparation Example 5-3 (starch 3.0%) | |
|---|---|---|---|---|
| | Average | Top 2% | Average | Top 2% |
| Overall preference | 4.13 | 87.5 | 3.75 | 62.5 |
| Appearance preference | 3.88 | 62 .5 | 2.75 | 12.5 |
| Porridge chewing preference | 3.75 | 62.5 | 3.00 | 37.5 |
| Rice texture preference | 3.63 | 50 | 3.25 | 37.5 |
| Vegetable texture preference | 3.75 | 62.5 | 3.00 | 25 |
| Porridge property preference | 3.88 | 75 | 3.50 | 50 |
| Vegetable taste preference | 3.75 | 75 | 3.00 | 50 |
| Weird taste/smell strength | 2.63 | 12.5 | 3.88 | 62.5 |

As a result of the sensory evaluation, it was confirmed that Preparation Example 5-2 added with the gum mix had relatively superior sensory preference to Preparation Example 5-3 added with starch.

### [5-3] Preparation of vegetable porridge with adjusted rice content

In order to prepare a vegetable porridge with preferable hardness and texture, a rice porridge was prepared by adjusting the content of rice to 22% to 26%. As a result of measuring the hardness of the rice porridge in the same manner, the hardness of the rice grains in the rice porridge was measured in the range of 450 to 800. The rice porridge was cooled to prepare a rice porridge block, and then a frozen porridge kit was prepared in a form mixed with a sauce block containing vegetables. Then, the vegetable porridge was prepared by adding water to heat the kit, and the hardness thereof was measured. As a result, in a final cooked vegetable porridge product, the hardness of the rice grains contained therein was a value of 250 to 600, which showed the texture of the porridge suitable for eating. The value was a value 200 lower than the hardness when the rice porridge block was prepared, and when a rice porridge block was prepared to have a hardness value 200 higher than the rice grain hardness in the final vegetable porridge, it was confirmed that a preferable texture of the rice grains can be obtained in the final product.

Hereinabove, representative Examples of the present invention have been exemplarily described, but the scope of the present invention is not limited only to the specific Examples as described above, and can be changed appropriately by those skilled in the art within the scope described in the appended claims of the present invention.

## Claims

1. A frozen porridge kit, comprising:
at least one frozen rice porridge block containing rice as a first block; and
at least one frozen sauce block containing a sauce as a second block.

2. The frozen porridge kit of claim 1, wherein the rice porridge block contains rice in a content of 22 wt% to 26 wt%.

3. The frozen porridge kit of claim 1, wherein the rice porridge block has a viscosity of 3.5 cm to 22 cm as measured by a Bostwick consistometer for 100 g of the rice porridge in an unfrozen state.

4. The frozen porridge kit of claim 1, wherein the rice porridge block has a moisture content of 15% to 25% as measured in the unfrozen state.

5. The frozen porridge kit of claim 1, wherein the rice porridge block has a solid content of 75% to 85% as measured in the unfrozen state.

6. The frozen porridge kit of claim 1, wherein the rice porridge block has a salinity of 0.4% to 0.5% as measured in the unfrozen state.

7. The frozen porridge kit of claim 1, wherein in the unfrozen state of the rice porridge block, the hardness of rice grains contained in the rice porridge block is 300 to 800 as measured by a texture analyzer.

8. The frozen porridge kit of claim 1, wherein the sauce block contains vegetables in a content of 40 wt% to 70 wt%.

9. The frozen porridge kit of claim 1, wherein the sauce block contains meat or seafood in a content of 50 wt% to 65 wt%.

10. The frozen porridge kit of claim 9, wherein the meat or seafood is contained in a raw material form.

11. The frozen porridge kit of claim 1, wherein the sauce block further contains gums in a content of 0.2 wt% to 1.3 wt%.

12. The frozen porridge kit of claim 11, wherein the gums are at least one selected from the group consisting of xanthan gum, pectin, carrageenan, gellan gum, locust bean gum, guar gum, agar, and gelatin.

13. The frozen porridge kit of claim 11, wherein the sauce block has a viscosity of 6 cm to 9 cm as measured by a Bostwick Consistometer for 100 g of a sauce in an unfrozen state.

14. The frozen porridge kit of claim 1, wherein the sauce block further contains starch in a content of 1.5 wt% to 5 wt%.

15. The frozen porridge kit of any one of claims 1 to 14, wherein at least one of the frozen rice porridge block and the frozen sauce block has grooves or holes formed on the surface thereof.

16. The frozen porridge kit of claim 15, wherein the groove is formed in a column shape on one side of the block, and the hole is formed by penetrating through the block.

17. The frozen porridge kit of any one of claims 1 to 14, wherein the number of the frozen rice porridge blocks and the number of the frozen sauce blocks are in a ratio of 5: 5 to 9: 1.

18. A method for preparing a porridge comprising thawing the frozen porridge kit of claim 1.

19. The method for preparing the porridge of claim 18, wherein the thawing comprises adding water to the frozen porridge kit.

20. A porridge prepared by the method for preparing the porridge of claim 18.
